(19) Europäisches Patentamt / European Patent Office / Office européen des brevets

(11) **EP 2 834 546 B1**

(12) **FASCICULE DE BREVET EUROPEEN**

(45) Date de publication et mention de la délivrance du brevet:
**15.06.2016 Bulletin 2016/24**

(21) Numéro de dépôt: **13715935.6**

(22) Date de dépôt: **02.04.2013**

(51) Int Cl.:
*F16L 11/08* (2006.01)  *F16L 33/01* (2006.01)
*F16L 58/10* (2006.01)  *F16L 1/26* (2006.01)
*F16L 11/16* (2006.01)  *F16L 25/10* (2006.01)
*F16L 33/26* (2006.01)  *F16L 37/14* (2006.01)
*F16L 33/24* (2006.01)  *F16L 33/30* (2006.01)
*B23P 15/00* (2006.01)  *B23P 19/04* (2006.01)

(86) Numéro de dépôt international:
**PCT/EP2013/056860**

(87) Numéro de publication internationale:
**WO 2013/149983 (10.10.2013 Gazette 2013/41)**

(54) **ASSEMBLAGE D'UNE CONDUITE TUBULAIRE FLEXIBLE POUR LE TRANSPORT DE FLUIDES D'HYDROCARBURES AVEC UN TUBE METALLIQUE SECONDAIRE**

ANORDNUNG AUS EINEM FLEXIBLEN ROHR ZUM TRANSPORT VON KOHLENWASSERSTOFFFLÜSSIGKEITEN UND EINEM SEKUNDÄREN METALLROHR

ASSEMBLY CONSISTING OF A FLEXIBLE TUBULAR PIPE FOR TRANSPORTING HYDROCARBON FLUIDS AND A SECONDARY METAL TUBE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.04.2012 FR 1253111**

(43) Date de publication de la demande:
**11.02.2015 Bulletin 2015/07**

(73) Titulaire: **Technip France**
**92400 Courbevoie (FR)**

(72) Inventeurs:
• **CASTEL, Yves**
**76150 La Vaupaliere (FR)**
• **LEVET, Alexandre**
**76000 Rouen (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
EP-A2- 2 230 432    WO-A1-01/50056
WO-A1-99/19656    FR-A- 1 391 946
US-A- 3 902 745    US-A1- 2006 186 664

**Description**

La présente invention concerne un assemblage d'une conduite tubulaire flexible pour le transport de fluides d'hydrocarbures, avec un tube métallique secondaire coaxial à la conduite tubulaire, selon le préambule de la revendication 1.

L'invention se rapporte également à une méthode de montage d'un assemblage d'une conduite tubulaire avec un tube métallique secondaire.

Les conduites tubulaires flexibles selon l'invention, bien connues de l'homme du métier, sont principalement utilisées pour extraire en mer des hydrocarbures et sont par exemple définie par la norme API 17J ou API RP 17B de l'American Petroleum Institute (API). Généralement, leur structure comprend une superposition de plusieurs couches, à savoir : une carcasse métallique, une gaine polymérique d'étanchéité interne ou « gaine de pression », des couches d'armures enroulées à l'extérieur autour de la gaine de pression afin de résister aux efforts de compression exercés par le la circulation du fluide pétrolier et aux contraintes de tension longitudinale. Au moins une première couche d'armure comporte au moins un fil d'armure enroulé à pas court sur la gaine étanche et forme des spires jointives ou « voûte de pression ». Et, au moins une seconde couche d'armure comportant des fils d'armure enroulés à pas long, est disposée autour de la voûte de pression. Habituellement, une gaine polymérique externe est extrudée au-dessus de la au moins une seconde couche d'armure.

Il est connu de l'état de la technique, notamment du document WO 99/19656, qui dévoile le préambule de la revendication 1, de procéder à l'assemblage d'une carcasse métallique de conduite tubulaire flexible avec un élément additionnel de manière à faciliter son ancrage au sein d'un embout de connexion.

L'élément additionnel est une bague d'arrêt positionnée à l'extrémité de la carcasse métallique et destinée à coopérer avec une gorge ménagée dans l'embout de connexion par opération de vissage le long d'un filetage défini par l'enroulement des feuillards métalliques profilés.

La bague d'arrêt est fixée sur la carcasse par opération de soudage ou plus simplement à l'aide d'une vis, afin de maintenir fixement l'assemblage. Cependant, un tel assemblage présente l'inconvénient de ne pas s'adapter aisément à tout type de carcasse : la fabrication de la bague d'arrêt étant dépendante de la dimension du diamètre extérieur de la carcasse autour de laquelle elle est destinée à être montée. D'autre part, l'assemblage peut requérir l'usage d'un cordon de soudure pour maintenir solidairement la bague et la carcasse ensemble, ce qui représente une opération supplémentaire et ne permet alors pas à l'assemblage d'être assemblé de manière irréversible.

D'autre part, dans le document WO 01/50056, il est décrit l'assemblage d'au moins deux tronçons de carcasse métallique de conduite tubulaire flexible entre eux. Chaque tronçon de carcasse, formés par l'enroulement de plusieurs feuillards profilés décrivent un pas de vis.

Au préalable, deux trous sont usinés dans chacun des tronçons. Le premier tronçon est positionné coaxialement par rapport au tronçon suivant puis ils sont fixés l'un à l'autre par opération de vissage des deux feuillards profilés ensemble jusqu'à ce que les deux trous usinés dans chacun d'eux coïncident. Ils sont ensuite maintenus ensemble solidairement par l'intermédiaire de systèmes vis-écrou. Un des inconvénients de ce type d'assemblage est qu'il faille usiner chaque tronçon de carcasse pour les connecter les uns aux autres. Un tel usinage peut par la suite engendrer des phénomènes de corrosion localisés et/ou des problèmes de tenue mécanique et de résistance aux efforts de tractions.

La présente invention vise à remédier aux inconvénients précités et concerne un assemblage d'une conduite tubulaire flexible pour le transport de fluides d'hydrocarbures selon la revendication 1.

Ainsi, un assemblage selon l'invention revêt certains avantages. En effet, un tel assemblage présente l'avantage d'être installé aisément et avec rapidité sur des lignes de transport de fluides d'hydrocarbures, préalablement installées, raccordées et en services sur une plateforme pétrolière ou bien sur toutes autres unités semi-submersibles, tels que les unités flottantes du type SPAR ou TLP (Tension Leg Platform) ou tel que les unités flottantes de production, stockage et déchargement du type FPSO (Floating Production, Storage & Offloading), etc.

En effet, l'installation de l'assemblage en offshore, nécessite peu de pièces et ne requiert aucune action additionnelle, par exemple une opération de perçage ou de soudage. De plus, dès lors que les caractéristiques de la conduite et plus précisément celles de la carcasse sont connues, les éléments constituants l'assemblage sont réalisés onshore en fonction. Enfin, conformément à l'invention, l'assemblage est entièrement démontable, sans pour autant causer de dommages à la carcasse.

L'assemblage selon l'invention peut comprendre l'une ou plusieurs des caractéristiques des revendications 2 à 8, prises isolément ou suivant toute combinaison techniquement possible.

On choisit avantageusement un acier de même nature pour la réalisation de la carcasse métallique et du ressort hélicoïdal afin de limiter les phénomènes de corrosion.

- Le fil d'acier est de section profilée pour assurer une meilleure coopération avec la pluralité d'interstice de la carcasse et pour améliorer sa tenue mécanique.
- Même après un test de résistance à un effort de traction de 5 tonnes, l'assemblage ne présente aucun signe de faiblesse.

L'invention a également pour objet une méthode de montage selon la revendication 9.

La méthode selon l'invention peut comprendre la ou les étapes énoncées dans les revendications 10 à 15, prise(s) indépendamment ou suivant toute(s) combinaison(s) techniquement possible(s).

L'invention sera mieux comprise à la lecture de la description qui va suivre, donnée uniquement à titre d'exemple et faite en référence aux dessins annexés sur lesquels :

- la Figure 1 est une vue schématique partielle en écorché d'une conduite tubulaire flexible selon l'invention ;
- la Figure 2 est une vue d'ensemble d'un élément d'accrochage, d'après l'invention ;
- la Figure 3 est une vue schématique partielle d'un tube métallique ;
- les Figures 4a, 4b, 4c et 4d sont des vues détaillées des différentes étapes successives d'assemblage d'une conduite tubulaire et d'un tube métallique secondaire, conformément à l'invention ;
- la Figure 5 est une vue schématique partielle en coupe d'un assemblage, conformément à l'invention ;
- les Figures 6a et 6b sont des vues partielles d'un dispositif de détection de présence de la carcasse métallique d'une conduite flexible selon l'invention ;

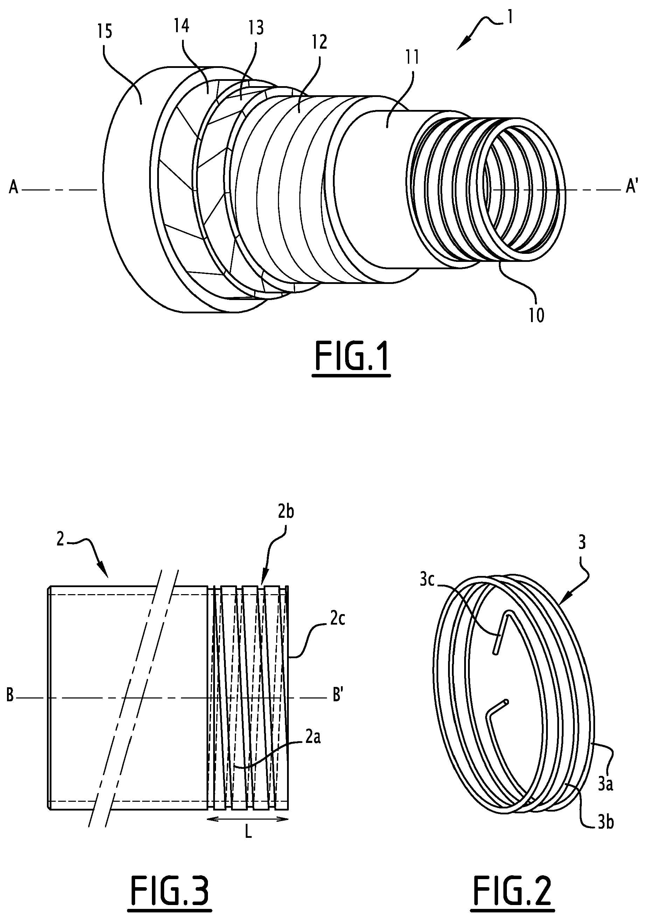

La conduite tubulaire 1 flexible selon l'invention et bien connue de l'homme du métier, est illustrée en Figure 1. Elle est formée d'un ensemble de différentes couches concentriques superposées les unes par rapport aux autres, autour d'un axe longitudinal A-A'. Les couches sont de type non liées (« unbonded » en anglais) et peuvent se mouvoir les unes par rapport aux autres. La conduite représentée en Figure 1 peut être utilisée comme conduite montante (« risers » en anglais) où comme conduite reposant sur le fond marin (« flowlines » en anglais). Par ailleurs, la conduite est du type à passage non lisse (« rough-bore » en anglais), c'est-à-dire que le fluide en circulation dans la conduite tubulaire 1 est en contact avec la carcasse 10 métallique, ladite carcasse 10 étant la première couche en regard de l'axe A-A'. Dans le cadre de l'invention, la conduite tubulaire 1 flexible est exclusivement du type « rough-bore ».

Les différentes couches, agencées concentriquement à l'axe longitudinal A-A', depuis celle située la plus proche dudit axe vers celle la plus éloignée de l'axe, sont les suivantes :

- une carcasse 10 métallique réalisée par l'enroulement à pas courts, selon un angle d'enroulement notamment compris entre 70° et 90° par rapport à l'axe A-A', d'un feuillard profilé et définissant une zone d'écoulement pour le passage d'un fluide d'hydrocarbure ;
- une gaine polymérique d'étanchéité interne 11 ou « gaine de pression » disposée autour de la carcasse 10 métallique, destinée à reprendre les efforts exercés par la pression hydrostatique et éviter tout risque d'effondrement de la carcasse 10 ;

- au moins une couche d'armure métallique telle que par exemple une nappe d'armure de résistance à la pression 12 ou «voûte de pression » formée par l'enroulement à pas courts, typiquement selon un angle d'armage compris entre 70° et 90°, de fils de forme métalliques profilés en Z, enT, en U, en K, en X, ou en I autour de la gaine de pression 11. Ladite voûte de pression 12 est destinée à reprendre les efforts de compression axiaux exercés par la circulation au sein de la zone d'écoulement, du fluide d'hydrocarbures sous pression ; ou bien au moins une nappe d'armures de résistance à la traction 13,14 formée par l'enroulement à pas long, typiquement selon un angle d'armage comprise entre 20° et 55° de fils de forme métalliques au-dessus de la voûte de pression 12 afin de reprendre les contraintes de tension longitudinale ; et
- une gaine polymérique externe 15 ou « gaine externe » disposée autour de la au moins une couche d'armure métallique 12 ; 13,14 afin de protéger ces dernières de toutes détériorations physiques extérieures.

Bien entendu, d'autres couches intermédiaires formées à partir d'un matériau polymérique extrudée comportant ou non des charges, ou bien à partir de l'assemblage en configuration auto-bloquée ou non auto-bloquée de feuillards métalliques, de fils métalliques ou de la combinaison des deux, peuvent être intercalées entre les couches précédemment citées.

D'ailleurs, dans le cas ou la conduite tubulaire 1 flexible comporte une « structure équilibrée », au moins deux nappes d'armures de résistance à la traction 13, 14 sont enroulés autour de la gaine de pression 11, selon un angle d'armage compris entre 50° et 60°.

En outre, l'utilisation de gaines polymériques en tant qu'écran thermique ou en tant que gaine à perméabilité réduite piégeant les gaz corrosifs, telle qu'un gaine anti-$H_2O$, anti-$H_2S$ ou anti $CO_2$, est tout à fait envisageable et non limitatif.

Dans la description de l'invention qui va suivre, le terme « amont » désigne l'extrémité proximale de la carcasse 10 métallique qui débouche vers l'environnement extérieur et par opposition, le terme « aval » désigne l'extrémité distale de la carcasse 10 métallique qui est la plus éloignée de l'environnement extérieur, à l'opposé de l'extrémité amont de la carcasse 10 métallique.

On notera également que les expressions « vers l'intérieur », « intérieur » et « interne » sont identiques et désignent tout élément ou partie d'élément situé le plus près de l'axe longitudinal A-A'. A l'inverse, les expressions « vers l'extérieur », « extérieur » et « externe » sont identiques et désignent tout élément ou partie d'élément situé le plus loin de l'axe longitudinal A-A'.

La conduite tubulaire 1 flexible d'après l'invention, telle que décrite ci-avant est destinée à être assemblée avec un tube métallique secondaire 2. Cet assemblage a notamment pour but de réaliser un dispositif de contrôle du déplacement de la carcasse 10 métallique grâce à un capteur à ultrasons.

En effet, les conduites 1 flexibles du type « risers » sont soumises à la reprise d'efforts de traction induits par le poids de la structure. Ces efforts étant d'autant plus importants que la profondeur d'eau à atteindre est grande. C'est pourquoi il est intéressant de s'intéresser au déplacement de la carcasse 10 métallique par rapport aux différentes couches constitutives de la conduite 1 flexible afin d'évaluer l'impact que l'effort de traction peut avoir sur celle-ci.

Le dispositif de contrôle par mesures ultrasonores du déplacement de la carcasse 10 métallique est composé d'un système d'alimentation électrique relié à un transducteur 80, du tube métallique secondaire 2 et d'un système d'acquisition et/ou de visualisation des données. Plus précisément, le dispositif de contrôle se rapporte à un procédé échographique ultrasonore par réflexion.

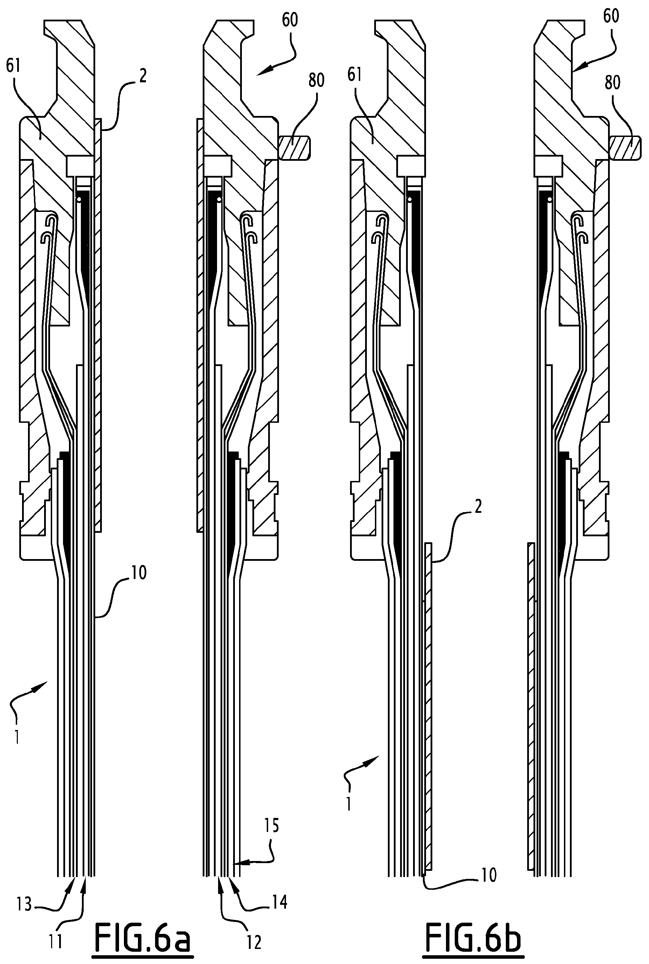

Illustré sur les Figure 6a et 6b, le tube métallique secondaire 2 est installé à l'intérieur de la carcasse 10 métallique et est maintenu solidairement à celle-ci grâce à un élément d'accrochage 3 (non représenté pour plus de clarté). La sonde 80 est positionnée sur la surface externe d'une voûte 61 d'un embout de fixation 60 et est reliée à un système d'alimentation électrique (non représenté) situé à quelques mètres de la conduite tubulaire 1 flexible. Afin de détecter la présence (Figure 6a) ou la non-présence (Figure 6b) de la carcasse 10 au droit du transducteur 80, le transducteur 80 émet une onde ultrasonore dans l'épaisseur de la voûte 61 de l'embout 60, dont la fréquence est comprise entre 500KHz et 2MHz. La fréquence de l'onde est choisie par rapport à la nature et à l'épaisseur du ou des éléments structurels à traverser ainsi qu'à la résolution spatiale recherchée.

Une fois atteint la surface interne de la voûte 61, une partie de l'onde est réfléchie vers le transducteur 80 et une autre partie est transmise au sein de l'épaisseur du tube métallique secondaire 2. En présence du tube métallique secondaire 2, l'écho de l'onde réfléchie vers le transducteur 80 est fortement atténué car une interface métal/métal diminue l'amplitude de l'onde réfléchie. En revanche, dès lors que le tube métallique secondaire 2 n'est plus présent au droit de la sonde 80, l'écho de l'onde réfléchi est moins atténué car une interface métal/fluide pétrolier ou métal/vide diminue de façon moindre l'amplitude de l'onde réfléchie. Si le tube métallique secondaire 2 a quitté sa position initiale, la conduite 1 assurant l'extraction de fluide pétrolier est arrêtée et une inspection de l'intérieur de celle-ci est généralement programmée afin de contrôler l'ampleur du déplacement de la carcasse métallique 10 par rapport aux autres couches constitutives de la conduite 1.

A présent, nous allons décrire de façon détaillée, en quoi consiste l'assemblage selon l'invention et la méthode permettant de le réaliser.

L'assemblage entre ladite conduite tubulaire 1 et ledit tube métallique 2 est réalisé grâce à un élément d'accrochage 3 tel que représenté à la Figure 2. L'élément d'accrochage 3 est un ressort hélicoïdal obtenu par opération de spiralage d'un fil métallique en acier dont le pas est choisi égal au pas moyen du pas de la carcasse 10 métallique. L'acier utilisé est préférentiellement de même nature que l'acier utilisé pour la réalisation de la carcasse 10 métallique, par exemple un acier inoxydable. Selon l'invention, le fil métallique spiralé pour la réalisation du ressort 3 est de section circulaire. Dans une variante de réalisation, le fil métallique spiralé possède une section profilée de forme complémentaire à la forme de l'empreinte définie par la pluralité d'interstices 10a du feuillard de la carcasse 10 métallique. Ce type de section profilée permet d'augmenter la surface de contact entre le fil métallique spiralé et la pluralité d'interstices 10a formés par l'enroulement du feuillard profilé et partant, la contrainte maximal acceptable par l'assemblage.

Le ressort 3 comprend au moins deux spires 3a, 3b préférentiellement quatre spires, non jointives et est muni d'au moins une patte d'accrochage 3c filetée, mise en forme à au moins une de ses deux extrémités. Avantageusement, le ressort 3 comprend deux pattes d'accrochage 3c filetées s'étendant radialement tout en se faisant face, vers l'intérieur du volume défini par le diamètre intérieur des spires 3a,3b.

Les pattes d'accrochage 3c sont configurées de sorte qu'elles permettent la mise en place du ressort 3 au sein de la carcasse 10 métallique. Pour ce faire, on utilise un dispositif d'installation 4 qui comprend des moyens d'accrochage 4b sur lesquels vont venir se fixer temporairement les pattes d'accrochage 3c.

La fixation des pattes d'accrochage 3c entraîne une réduction du diamètre du ressort 3, permettant alors son insertion à l'intérieur de la carcasse 10. Ensuite, les pattes 3c sont libérées des moyens d'accrochage 4b du dispositif d'installation 4, entrainant l'expansion des spires 3a, 3b du ressort 3 au sein de la pluralité d'interstices 10a de la carcasse 10 métallique.

Le tube métallique secondaire 2 illustré en Figure 3 est configuré pour coopérer coaxialement avec la carcasse 10 de la conduite tubulaire 1 par l'intermédiaire du ressort 3 hélicoïdal préalablement installé à l'intérieur de la carcasse 10. Ledit diamètre externe du tube métallique 2 est néanmoins ajusté au plus près du diamètre interne de la carcasse 10 afin qu'il puisse être introduit et partant, assemblé avec un jeu minimum. Le tube métallique secondaire 2 comporte à l'une de ses extrémités un filetage 2a ménagé dans l'épaisseur de sa surface externe. L'épaisseur du tube métallique secondaire 2, défini par le rapport entre son diamètre externe et son diamètre interne, dépend du diamètre de la carcasse 10 métallique et doit être relativement épais afin que la réalisation du filetage 2a n'entraîne pas de fragilisation dudit tube métallique secondaire 2. L'épaisseur du tube métallique secondaire 2 est comprise entre cinq millimètres et vingt millimètres, préférentiellement entre dix millimètres et quinze millimètres.

Le filetage 2a définie une rainure 2b s'étendant hélicoïdalement sur la surface externe du tube métallique 2 par rapport à un axe longitudinal B-B', dont le pas est sensiblement égal au pas moyen d'enroulement des feuillards profilés de la carcasse 10 métallique, c'est-à-dire au pas court, correspondant à l'angle d'hélice que fait la rainure 2b par rapport à l'axe B-B' (ou A-A') et qui est compris notamment entre 70° et 90°. La rainure 2b est usinée depuis un rebord 2c situé à l'extrémité du tube, sur une longueur L. La hauteur h de la rainure 2b est comprise entre deux et trois millimètres, avantageusement, h est égale à deux virgule cinq millimètres.

La largeur /de la rainure 2b dépend de deux paramètres explicités dans la formule ci-après :

$$l = \left(\frac{n}{2} - \frac{1}{2}\right) \times \Delta p$$

Avec :

- $\Delta p$, la différence entre le pas minimal et le pas maximal de la carcasse 10, pris en compte pour la réalisation du filetage 2a ; et
- $n$, le nombre de spires du ressort 3 choisi pour assembler la conduite tubulaire 1 et le tube métallique secondaire 2.

La longueur L le long de laquelle s'étend la rainure 2b, dépend également des paramètres décrits ci-dessus, à savoir : la largeur / de la rainure 2b, la différence $\Delta p$ entre le pas minimal et le pas maximal de la carcasse 10, pris en compte pour la réalisation du filetage 2a, ainsi que le nombre $n$ de spires du ressort 3. Les valeurs de pas minimal et de pas maximal sont regroupées dans des tables de données fournies par le constructeur de la conduite. Ces valeurs peuvent également être vérifiées à l'aide de mesures effectuées sur la ligne de production des conduites flexibles destinées à recevoir le dispositif de contrôle ou mesurées à posteriori. Le nombre de spires $n$ du ressort 3 est choisi égal à au moins deux spires, préférentiellement égal à quatre spires et n'excède généralement pas cinq spires pour assurer un contact suffisant entre la carcasse 10 métallique et le tube métallique secondaire 2. En tenant compte de ces paramètres ainsi que du diamètre de la carcasse 10 métallique, il est possible de définir une longueur L minimale sur laquelle la rainure 2b décrit au moins une révolution. Il est également possible de définir une longueur L maximale sur laquelle la rainure 2b décrit au moins cinq révolutions. Dans le cas où L est maximal, le pas du filetage 2a doit être déterminé avec précision afin que l'ajustement entre la carcasse 10 et le tube secondaire métallique 2 reste cohérent, c'est-à-dire qu'il y ait un contact suffisant entre le ressort 3 et la rainure 2b du tube métallique secondaire 2 sur l'ensemble de la longueur L.

L'appréciation du contact entre les éléments 2 et 3 de l'assemblage repose sur les connaissances de l'homme du métier et permet de prendre en compte les variations de pas de la carcasse 10 métallique le long de la longueur L.

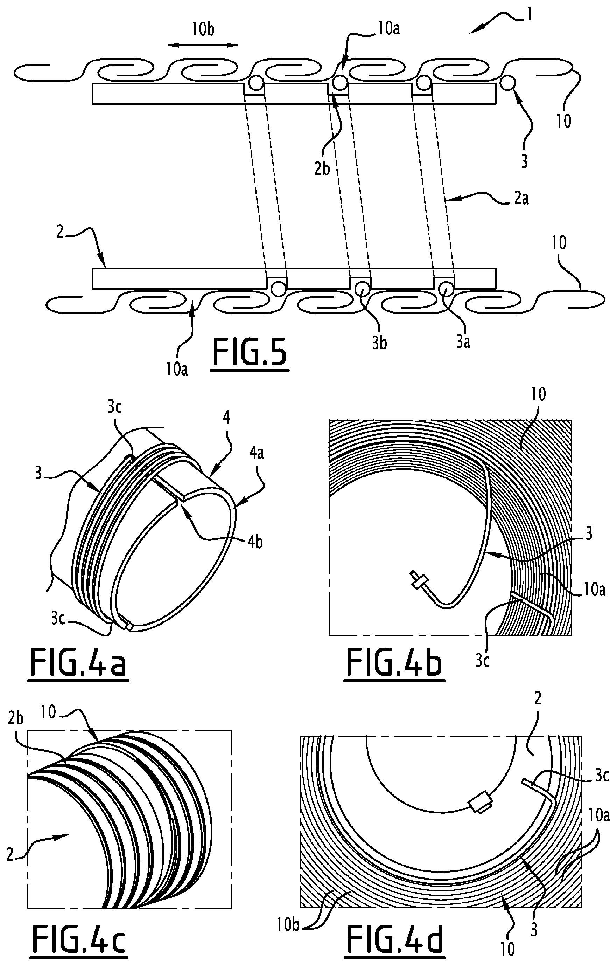

La méthode d'assemblage de la carcasse 10 métallique de la conduite tubulaire 1 flexible avec un tube métallique secondaire 2, plus précisément les différentes étapes nécessaire pour le réaliser, sont illustrées sur les Figures 4a à 4d.

La Figure 4a décrit la première étape de la méthode d'assemblage, à savoir l'accrochage du ressort hélicoïdal 3 sur le dispositif d'installation 4. Le dispositif d'installation 4 ici utilisé, est fabriqué à l'aide d'un matériau polymérique, plus précisément avec du polychlorure de vinyle ou PVC, extrudé sous la forme d'un tube. Cependant, le tube 4 peut aussi être réalisé en acier, préférentiellement en acier inoxydable. A l'une de ses extrémités 4a, le tube 4 comporte une encoche 4b permettant l'accrochage du ressort 3. En effet, les spires du ressort 3 sont tout d'abord comprimées axialement, puis le ressort 3 est emmanché sur le tube d'installation 4, et in fine, les pattes d'accrochage 3c du ressort 3 sont insérées dans l'encoche 4b dudit tube 4. De manière avantageuse, les pattes d'accrochage 3c sont maintenues fixes par blocage radial avec le tube d'installation 4, des boulons sont rapportés puis vissés sur les extrémités filetées des pattes d'accrochage 3c.

Dès lors que le ressort 3 est accroché sur le tube d'installation 4, on insère par glissement le tube 4 à l'intérieur de la carcasse 10 métallique selon l'axe A-A' et, comme illustré sur la Figure 4b, les au moins deux spires 3a, 3b du ressort 3 sont ajustées avec la pluralité d'interstices 10a de la carcasse 10 métallique. Comme le diamètre externe des au moins deux spires 3a, 3b est choisi égale à 110% du diamètre interne de la carcasse 10 métallique, lorsque les boulons sont retirés, les au moins deux spires 3a,3b s'étendent radialement, libérant le ressort 3 du tube d'installation 4 et assurant son insertion au sein des interstices 10a.

On notera aussi que l'ancrage du ressort 3 au sein des interstices 10a est dépendant du pas de la carcasse 10. Dans le cas ou le pas de la carcasse 10 est maximum, c'est-à-dire lorsque l'espacement interstitiel est maximal, l'écart entre le diamètre interne de la carcasse 10 et le diamètre interne du ressort 3 est au moins égale à 1,5 millimètre.

Et, de manière à ce que la connexion entre le tube métallique secondaire 2 et la carcasse 10 métallique soit possible, la patte d'accrochage 3c amont est brisée à l'aide d'un outil approprié, par exemple une pince coupante.

Selon une variante d'installation, s'il est difficile d'ajuster le ressort 3 à l'intérieur de la carcasse 10 à cause d'un jeu radial restreint, le ressort 3 est alors découpé en plusieurs segments de 120°. Chaque segment est inséré l'un après l'autre dans les interstices 10a de la carcasse 10 métallique à l'aide d'un agent lubrifiant, ce qui permet de proche en proche, de reconstituer le ressort 3 et de rendre possible l'installation du tube métallique secondaire 2.

En regard de la Figure 4c est illustré le tube métallique secondaire 2. Il est dans un premier temps centré axialement relativement à la carcasse 10 métallique, à l'intérieur de laquelle le ressort 3 a été préalablement installé. Puis, il est inséré à l'intérieur de la carcasse 10 métallique. La rainure 2b filetée dans l'épaisseur du tube secondaire 2, conformée pour coopérer avec les spires 3a, 3b du ressort 3 permet d'assembler lesdites spires 3a, 3b avec le tube 2, par une opération de vissage. Ainsi, le tube métallique 2 est à présent connecté avec la carcasse 10 métallique.

La dernière étape de la méthode d'assemblage est illustrée en Figure 4d. Une fois le tube secondaire 2 arrivé en butée contre la patte d'accrochage 3c aval, l'opération de vissage est considérée comme achevée et le tube métallique secondaire 2 est alors bloqué en translation par rapport à la carcasse 10 métallique. Préférentiellement, on bloquera aussi en rotation le tube 2 par rapport à la carcasse 10. Pour ce faire, on perce un trou dans le tube métallique secondaire 2 au niveau de l'extrémité de la patte d'accrochage 3c aval puis on vient fixer le ressort 3 et le tube 2 ensemble, par une opération de boulonnage.

De manière optionnelle, il est possible de couler une résine polymérique, par exemple une résine époxy, au niveau du ressort 3 et plus particulièrement entre chaque spire, afin d'augmenter la résistance de l'assemblage et partant sa résistance mécanique.

Même si le tube métallique secondaire 2 est maintenu fixe en translation et en rotation par rapport à la carcasse 10 métallique, il est néanmoins démontable aisément si cela est nécessaire et ce, sans que la carcasse 10 métallique ne subisse de dommage. L'assemblage que propose l'invention est optimisé pour être entièrement monté et démonté à souhait.

L'assemblage terminé est visible sur la Figure 5, ou seule la carcasse 10 métallique de la conduite tubulaire 1 flexible y est représentée. La carcasse 10 métallique formée par l'enroulement hélicoïdal de plusieurs feuillards profilés agrafés entre eux, définit un profil de section présentant une alternance d'interstices 10a intercalés entre deux spires 10b, aptes à recevoir au moins deux spires 3a, 3b non jointives de l'élément d'accrochage ou ressort 3.

Le tube métallique secondaire 2 comportant le filetage 2a définissant la rainure 2b est vissé au ressort 3 par coopération de la rainure 2b avec les au moins deux spires 3a, 3b dudit ressort 3, il est représenté fixe en translation et en rotation par rapport à la carcasse 10. D'après la figure 5, l'assemblage tel qu'il est illustré peut être considéré comme fonctionnel et prêt à l'utilisation.

Bien entendu, les modes de réalisation décrit précédemment ne sont donnés qu'à titre d'exemples non limitatifs. D'autres variantes d'exécution peuvent être réalisées sans pour autant sortir du cadre de l'invention comme énoncé dans l'objet des revendications 1à 15.

## Revendications

1. Assemblage d'une conduite tubulaire (1) flexible pour le transport de fluides d'hydrocarbures comprenant :

   • une carcasse (10) métallique réalisée par l'enroulement hélicoïdal à pas court d'un feuillard profilé, ledit feuillard définissant une pluralité d'interstices (10a) entre chaque spire (10b) d'enroulement ;
   • une gaine polymérique d'étanchéité interne (11);
   • au moins une couche d'armure métallique (12 ; 13, 14) ; et
   • une gaine polymérique externe (15) ;

   avec un tube métallique secondaire (2) coaxial à la conduite tubulaire (1), **caractérisé en ce qu'**un élément d'accrochage (3) comprenant au moins deux spires (3a, 3b) non-jointives est inséré au sein de la carcasse (10) métallique et coopère avec la pluralité d'interstice (10a) et **en ce qu'**au moins une des extrémités dudit tube métallique secondaire (2) comporte un filetage (2a) à pas court définissant une rainure (2b) hélicoïdale, ladite rainure (2b) étant vissée avec les au moins deux spires (3a, 3b) non-jointives dudit élément d'accrochage (3).

2. Assemblage selon la revendication 1, **caractérisé en ce que** le diamètre desdites au moins deux spires (3a, 3b) non-jointives de l'élément d'accrochage (3) est choisi au moins égal à 110% du diamètre interne du feuillard profilé de la carcasse (10) métallique.

3. Assemblage selon la revendication 1 ou 2, **caractérisé en ce que** les au moins deux spires (3a, 3b) de l'élément d'accrochage (3) en contact avec la pluralité d'interstices (10a) exercent un effort radial sur la carcasse (10).

4. Assemblage selon l'une quelconque des revendications précédentes, **caractérisé en ce que** l'écart entre le diamètre interne de la carcasse (10) métallique et le diamètre interne de l'élément d'accrochage (3) est au moins égale à 1,5 millimètre.

5. Assemblage selon l'une quelconque des revendications précédentes, **caractérisé en ce que** l'élément d'accrochage (3) comporte à au moins une de ses extrémités, une patte d'accrochage (3c) qui s'étend radialement et vers l'intérieur du volume défini par le diamètre des spires (3a, 3b).

6. Assemblage selon l'une quelconque des revendications précédentes, **caractérisé en ce que** l'élément d'accrochage (3) est un ressort hélicoïdal.

7. Assemblage selon l'une quelconque des revendications précédentes, **caractérisé en ce que** les au moins deux spires (3a, 3b) non-jointives de l'élément d'accrochage (3) sont mises en forme par une opération de spiralage d'un fil d'acier, avantageusement en acier inoxydable, le fil d'acier étant en particulier de section circulaire, ou de de section profilée.

8. Assemblage selon l'une quelconque des revendications précédentes, **caractérisé en ce que** l'élément d'accrochage (3), fixé à la carcasse (10) métallique, résiste à un effort de traction compris entre 2 tonnes et 10 tonnes, préférentiellement à un effort de 5 tonnes.

9. Méthode de montage d'un assemblage d'une conduite tubulaire (1) flexible avec un tube métallique secondaire (2) selon les revendications 1 à 8, **caractérisé en ce qu'**elle comporte les étapes consistant à :

   a) accrocher l'élément d'accrochage (3) à l'une des deux extrémités d'un dispositif d'installation (4) ;
   b) insérer le dispositif d'installation (4) relativement à la carcasse (10) métallique ;
   c) ajuster l'élément d'accrochage (3) par rapport à la carcasse (10) métallique ;
   d) libérer l'élément d'accrochage (3) ;
   e) retirer le dispositif d'installation (4) ;
   f) positionner et insérer le tube métallique secondaire (2) relativement à la carcasse (10) métallique; et
   g) fixer l'élément d'accrochage (3) audit tube métallique secondaire (2).

10. Méthode de montage d'un assemblage selon la revendication 9, **caractérisée en ce que** l'étape a) comprend une étape $a_1$) de mise en compression axiale des spires (3a, 3b), puis une étape $a_2$) d'insertion de la au moins une patte d'accrochage (3c) de l'élément d'accrochage (3) au sein d'au moins une encoche (4b) ménagée à l'une des extrémités (4a) du dispositif d'installation (4), avantageusement suivie d'un boulonnage de ladite au moins une patte d'accrochage (3c) par rapport à l'encoche (4b).

11. Méthode de montage d'un assemblage selon la revendication 9, **caractérisé en ce que** l'étape d), présente une phase d'expansion radiale des spires (3a, 3b) de l'élément d'accrochage (3) au sein de la pluralité d'interstices (10a) de la carcasse (10) métallique.

12. Méthode de montage d'un assemblage selon la revendication 9, **caractérisé en ce que** l'étape f) comporte une étape $f_1$) de centrage coaxial du tube métallique secondaire (2) relativement au diamètre interne de la carcasse (10) métallique puis une étape $f_2$) de vissage de la rainure (2b) du tube métallique secondaire (2) par rapport aux spires (3a, 3b) de l'élément d'accrochage (3).

13. Méthode de montage d'un assemblage selon la revendication 9, **caractérisé en ce que** l'étape g) comprend une opération de boulonnage de la au moins une patte d'accrochage (3c) de l'élément d'accrochage (3) avec le tube métallique secondaire (2).

14. Méthode de montage d'un assemblage selon les revendications 9 à 13, **caractérisé en ce qu'**elle comporte après l'étape g), une étape $g_1$) d'application d'une résine polymère entre les spires (3a, 3b) de l'élément d'accrochage (3) et le tube métallique secondaire (2).

15. Méthode de montage d'un assemblage selon la revendication 9, **caractérisé en ce que** l'étape f) comprend une étape $f'_1$) de centrage coaxial du tube métallique secondaire (2) relativement au diamètre externe de la carcasse (10) métallique puis une étape $f'_2$) de vissage de la rainure (2b') du tube métallique secondaire (2) par rapport aux spires (3a, 3b) de l'élément d'accrochage (3).

**Patentansprüche**

1. Verbund einer flexiblen Rohrleitung (1) für den Transport von Kohlenwasserstoff-Fluiden, welche aufweist:

   • eine metallische Karkasse (10), die durch die wendelförmige Wickelung mit kleiner Steigung eines profilierten Bands realisiert ist, wobei das Band eine Mehrzahl von Zwischenräumen (10a) zwischen jeder Windung (10b) der Wicklung definiert,
   • eine innere, polymerische Dichthülle (11),
   • wenigstens eine metallische Verstärkungsschicht (12; 13, 14) und
   • eine äußere, polymerische Hülle (15), mit einem sekundären metallischen Rohr (2), das zu der Rohrleitung (1) koaxial ist,

   **dadurch gekennzeichnet, dass** ein Kopplungselement (3), das wenigstens zwei nicht aneinander anliegende Windungen (3a, 3b) hat, in das Innere der metallischen Karkasse (10) eingesetzt ist und mit der Mehrzahl von Zwischenräumen (10a) zusammenwirkt und dass wenigstens eines der Enden des sekundären metallischen Rohrs (2) ein Gewinde (2a) mit einer kleiner Steigung aufweist, das eine wendelförmige Nut (2b) definiert, wobei die besagte Nut (2b) mit den wenigstens zwei nicht aneinander anliegenden Windungen (3a, 3b) des besagten Kopplungselements (3) verschraubt ist.

2. Verbund gemäß Anspruch 1, **dadurch gekennzeichnet, dass** der Durchmesser der besagten wenigstens zwei nicht aneinander anliegenden Windungen (3a, 3b) des Kopplungselements (3) gewählt ist als wenigstens gleich 110% des Innendurchmessers des profilierten Bands der metallischen Karkasse (10).

3. Verbund gemäß Anspruch 1 oder 2, **dadurch gekennzeichnet, dass** die wenigstens zwei Windungen (3a, 3b) des Kopplungselements (3), die in Kontakt mit der Mehrzahl von Zwischenräumen (10a) sind, eine radiale Kraft auf die Karkasse (10) ausüben.

4. Verbund gemäß irgendeinem der vorhergehenden Ansprüche, **dadurch gekennzeichnet, dass** der Abstand zwischen dem Innendurchmesser der metallischen Karkasse (10) und dem Innendurchmesser des Kopplungselements (3) wenigstens gleich 1,5 Millimeter ist.

5. Verbund gemäß irgendeinem der vorhergehenden Ansprüche, **dadurch gekennzeichnet, dass** das Kopplungselement (3) an wenigstens einem seiner Enden eine Kopplungsklaue (3c) aufweist, die sich radial und zu dem Inneren des Volumens erstreckt, das von dem Durchmesser der Windungen (3a, 3b) definiert ist.

6. Verbund gemäß irgendeinem der vorhergehenden Ansprüche, **dadurch gekennzeichnet, dass** das Kopplungselement (3) eine Schraubenfeder ist.

7. Verbund gemäß irgendeinem der vorhergehenden Ansprüche, **dadurch gekennzeichnet, dass** die wenigstens zwei nicht aneinander liegenden Windungen (3a, 3b) des Kopplungselements (3) in Form gebracht sind durch einen Vorgang des Wickelns eines Drahtfadens aus Stahl, vorteilhaft aus nichtrostendem Stahl, wobei der Drahtfaden aus Stahl insbesondere einen Kreisquerschnitt oder einen profilierten Querschnitt hat.

8. Verbund gemäß irgendeinem der vorhergehenden Ansprüche, **dadurch gekennzeichnet, dass** das Kopplungselement (3), das an der metallischen Karkasse (10) befestigt ist, einer Zugkraft zwischen 2 Tonnen und 10 Tonnen, insbesondere einer Zugkrafgt von 5 Tonnen, widersteht.

9. Verfahren zur Montage eines Verbunds einer flexiblen Rohrleitung (10) mit einem sekundären metallischen Rohr (2) gemäß den Ansprüche 1 bis 8, **dadurch gekennzeichnet, dass** es die Schritte auf, die bestehen aus:

   a) Koppeln des Kopplungselements (3) mit einem von zwei Enden einer Installationsvorrichtung (4),
   b) Einsetzen der Installationsvorrichtung (4) relativ zu der metallischen Karkasse (10),
   c) Justieren des Kopplungselements (3) bezüglich der metallischen Karkasse (10),
   d) Freigeben des Kopplungselements (3),
   e) Zurückziehen der Installationsvorrichtung (4),
   f) Positionieren und Einsetzen des sekundären metallischen Rohrs (2) relativ zu der metallischen Karkasse (10), und
   g) Fixieren des Kopplungselements (3) an dem sekundären metallischen Rohr (2).

10. Verfahren zur Montage eines Verbunds gemäß Anspruch 9, **dadurch gekennzeichnet, dass** Schritt a) aufweist einen Schritt $a_1$) des axialen Komprimierens der Windungen (3a, 3b), dann einen Schritt $a_2$) des Einsetzens der wenigstens einen Kopplungsklaue (3c) des Kopplungselements (3) in das Innere wenigstens einer Nut (4b), die an einem der Enden (4a) der Installationsvorrichtung (4) vorgesehen ist, vorteilhafterweise gefolgt von einem Bolzen-Verbinden der wenigstens einen Kopplungsklaue (3c) bezüglich der Nut (4b).

11. Verfahren zur Montage eines Verbunds gemäß Anspruch 9, **dadurch gekennzeichnet, dass** der Schritt d) ein Phase der radialen Expansion der Windungen (3a, 3b) des Kopplungselements (3) in das Innere der Mehrzahl von Zwischenräumen (10a) der metallischen Karkasse (10) aufweist.

12. Verfahren zur Montage eines Verbunds gemäß Anspruch 9, **dadurch gekennzeichnet, dass** der Schritt f) aufweist einen Schritt $f_1$) der koaxialen Zentrierung des sekundären metallischen Rohrs (2) relativ zum Innendurchmesser der metallischen Karkasse (10) und dann einen Schritt $f_2$) des Schraubens der Nut (2b) des sekundären metallischen Rohrs (2) bezüglich der Windungen (3a, 3b) des Kopplungselements (3).

13. Verfahren zur Montage eines Verbunds gemäß Anspruch 9, **dadurch gekennzeichnet, dass** der Schritt g) einen Vorgang des Bolzen-Verbindens der wenigstens einen Kopplungsklaue (3c) des Kopplungselements (3) mit dem sekundären metallischen Rohr (2) aufweist.

14. Verfahren zur Montage eines Verbunds gemäß den Ansprüchen 9 bis 13, **dadurch gekennzeichnet, dass** es nach dem Schritt g) einen Schritt $g_1$) des Einbringens eines polymerischen Harzes zwischen die Windungen (3a, 3b) des Kopplungselements (3) und das sekundäre metallische Rohr (2) aufweist.

15. Verfahren zur Montage eines Verbunds gemäß Anspruch 9, **dadurch gekennzeichnet, dass** der Schritt f) aufweist einen Schritt f'$_1$) des koaxialen Zentrierens des sekundären metallischen Rohrs (2) relativ zu dem Außendurchmesser der metallischen Karkasse (10) und dann einen Schritt f'$_2$) des Schraubens der Nut (2b') des sekundären metallischen Rohrs (2) bezüglich der Windungen (3a, 3b) des Kopplungselements (3).

**Claims**

1. - An assembly of a flexible tubular pipe (1) for transporting hydrocarbon fluids that comprises:

   • a metal carcass (10) made by the short pitched helical winding of a profiled strip, the said strip defining a plurality of intervening gaps (10a) between each winding turn (10b),
   • an inner polymeric sealing sheath (11);
   • at least one metal armour layer (12 ; 13, 14); and
   • an outer polymeric sheath (15) ;

   with a secondary metal tube (2) coaxial to the tubular pipe (1), **characterised in that** a fastening element (3) comprising of at least two non-touching turns (3a, 3b) is inserted within the metal carcass (10) and cooperates with the plurality of intervening gaps (10a) and **in that** at least one of the ends of the said secondary metal tube (2) has a short pitched thread (2a) defining a helical groove (2b), the said groove (2b) being screwed in with the at least two non-touching turns (3a, 3b) of the said fastening element (3).

2. - An assembly according to claim 1, **characterised in that** the diameter of the said at least two non-touching turns (3a, 3b) of the fastening element (3) is chosen to be equal to 110% of the inner diameter of the profiled strip of the metal carcass (10).

3. - An assembly according to claim 1 or 2, **characterised in that** the at least two turns (3a, 3b) of the fastening element (3) in contact with the plurality of intervening gaps exert (10a) a radial force on the carcass (10).

4. - An assembly according to any one of the preceding claims, **characterised in that** the distance between the inner diameter of the metal carcass (10) and the inner diameter of the fastening element (3) is at least equal to 1.5 millimetres.

5. - An assembly according to any one of the preceding claims, **characterised in that** the fastening element (3) includes at least at one of its ends, a fastening tab (3c) which extends radially and towards the interior of the volume defined by the diameter of the turns (3a, 3b).

6. - An assembly according to any one of the preceding claims, **characterised in that** the fastening element (3) is a helical coil spring.

7. - An assembly according to any one of the preceding claims, **characterised in that** the at least two non-touching turns (3a, 3b) of the fastening element (3) are formed by means of an operation of spiral winding of a steel wire, advantageously made out of stainless steel, the steel wire being in particular of a circular cross section, or of a profiled cross section.

8. - An assembly according to any one of the preceding claims **characterised in that** the fastening element (3) fastened to the metal carcass (10) is resistant to a tensile force of between 2 tonnes and 10 tonnes, preferably able to withstand a tensile force of 5 tonnes.

9. - A method for mounting an assembly of a flexible tubular pipe (1) with a secondary metal tube (2) according to claims 1 to 8, **characterised in that** it includes the following steps consisting of:

   a) fastening the fastening element (3) on to one of two ends of an installation device (4),
   b) inserting the installation device (4) relative to the metal carcass (10) ;
   c) adjusting the fastening element (3) relative to the metal carcass (10) ;
   d) releasing the fastening element (3) ;
   e) removing the installation device (4) ;
   f) positioning and inserting the secondary metal tube (2) relative to the metal carcass (10); and
   g) securing the fastening element (3) to the said secondary metal tube (2).

10. - A method for mounting an assembly according to claim 9, **characterised in that** the step a) comprises a step $a_1$) of bringing about axial compression of the turns (3a, 3b), then a step $a_2$) of insertion of the at least one fastening tab (3c) of the fastening element (3) into at least one notch (4b) provided at one of the ends (4a) of the installation device (4), advantageously followed by a bolting of the said at least one fastening tab (3c) relative to the notch (4b).

11. - A method for mounting an assembly according to claim 9, **characterised in that** the step d), has a phase of radial expansion of the turns (3a, 3b) of the fastening element (3) within the plurality of intervening gaps (10a) of the metal carcass (10).

**12.** - A method for mounting an assembly according to claim 9, **characterised in that** the step f) includes a step $f_1$) of coaxial centering of the secondary metal tube (2) relative to the inner diameter of the metal carcass (10) and then a step $f_2$) of screwing of the groove (2b) of the secondary metal tube (2) into the turns (3a, 3b) of the fastening element (3).

**13.** - A method for mounting an assembly according to claim 9, **characterised in that** the step g) comprises an operation of bolting of the at least one fastening tab (3c) of the fastening element (3) with the secondary metal tube (2).

**14.** - A method for mounting an assembly according to claims 9 to 13, **characterised in that** it includes after the step g), a step $g_1$) of application of a polymer resin between the turns (3a, 3b) of the fastening element (3) and the secondary metal tube (2).

**15.** - A method for mounting an assembly according to claim 9, **characterised in that** the step f) includes a step $f'_1$) of coaxial centering of the secondary metal tube (2) relative to the outer diameter of the metal carcass (10) and then a step $f'_2$) of screwing of the groove (2b') of the secondary metal tube (2) into the turns (3a, 3b) of the fastening element (3).

## FIG.1

## FIG.3

## FIG.2

**FIG.5**

**FIG.4a**

**FIG.4b**

**FIG.4c**

**FIG.4d**

**FIG.6a**

**FIG.6b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9919656 A

- WO 0150056 A